# EUROPÄISCHE PATENTSCHRIFT

(11) **EP 1 991 502 B1**
(45) Veröffentlichungstag und Bekanntmachung des Hinweises auf die Patenterteilung: **03.04.2013**
(21) Anmeldenummer: 07712269.5
(22) Anmeldetag: 21.02.2007
(51) Int. Cl.: C01B 33/18

(54) **VERFAHREN ZUR WIEDERVERWERTUNG VON HOCHSIEDENDEN VERBINDUNGEN INNERHALB EINES CHLORSILANVERBUNDES**
PROCESS FOR RECYCLING HIGH-BOILING COMPOUNDS WITHIN AN INTEGRATED CHLOROSILANE SYSTEM
PROCEDE DE RECYCLAGE DE COMPOSES A POINT D'EBULLITION ELEVE COMPRENANT UN GROUPEMENT CHLOROSILANE

(30) Priorität: 03.03.2006 DE 102006009953
(43) Veröffentlichungstag der Anmeldung: 19.11.2008
(73) Patentinhaber: Wacker Chemie AG, 81737 München (DE)
(72) Erfinder: PÄTZOLD, Uwe, 84489 Burghausen (DE); NIEMETZ, Markus, 5121 St. Radegund (AT)
(74) Vertreter: Potten, Holger
(86) Internationale Anmeldenummer: PCT/EP2007/051665
(87) Internationale Veröffentlichungsnummer: WO 2007/101790

(56) Entgegenhaltungen:
- EP-A1- 0 706 972
- EP-A1- 0 790 213
- DE-A1- 2 909 815
- DE-A1- 3 712 125
- GB-A- 2 049 641
- US-A- 4 565 682
- US-A- 5 785 941
- US-B1- 6 322 765

## Beschreibung

Die Erfindung betrifft ein Verfahren zur Wiederverwertung von hochsiedenden Verbindungen innerhalb eines Chlorsilanverbundes zur Herstellung von Halbleiter-Silicium, bestehend aus einer Trichlorsilan-Erzeugung, Si-Abscheidung und der Erzeugung von hochdisperser Kieselsäure.

In einem Verbund zur Herstellung von Halbleiter-Silicium wird Trichlorsilan als Roh-Silan entweder aus metallurgischem Silicium und HCl oder aus metallurgischem Silicium mit SiCl₄/H₂ in einem Wirbelschichtreaktor erzeugt. Anschließend wird das Roh-Silan mittels Destillation/Reinigung zu Trichlorsilan gereinigt. Aus dem gereinigten Trichlorsilan wird polykristallines Silicium abgeschieden, wobei u.a. SiCl₄ entsteht. Die Verwertung des SiCl₄ (z. B. die Hydrierung zu Trichlorsilan oder die Verbrennung zu hochdisperser Kieselsäure bzw. Kieselsäureestern) ist Stand der Technik. Bei der Abscheidung von polykristallinem Silicium aus einem Gemisch von Chlorsilan, insbesondere Trichlorsilan, und Wasserstoff entsteht neben SiCl₄ eine Fraktion hochsiedender Chlorsilane (Sirtl, J. Electrochem. Soc 121 (1974) 919; Sirtl, Z. Anorg. Allg. Chemie 332 (1964) 113; Göppinger DE3024319). Der Begriff "hochsiedende Chlorsilane" bezeichnet dabei Verbindungen, welche aus Silicium, Chlor, ggf. Wasserstoff, Sauerstoff und Kohlenstoff bestehen und einen höheren Siedepunkt als Tetrachlorsilan (57°C/bei 1013 hPa) aufweisen. Bevorzugt handelt es sich um Disilane HₙCl₆₋ₙSi₂ (n= 0 - 4) und höhere Oligo(chlor)silane vorzugsweise mit 2 bis 4 Si Atomen sowie Disiloxane HₙCl₆₋ₙSi₂O (n= 0 - 4) und höhere Siloxane vorzugsweise mit 2 bis 4 Si Atomen einschließlich zyklischer Oligosiloxane sowie deren Methylderivate. Diese Fraktion wird im Folgenden auch Hochsiederfraktion genannt.

Im Abgas der Si-Abscheidereaktoren finden sich somit neben Dichlorsilan, Trichlorsilan und Siliciumtetrachlorid je nach Abscheidebedingungen wechselnde Gehalte (von 0,001 - 2 Gew.%) an hochsiedenden Chlorsilanen. In einer typischen Zusammensetzung bestehen diese hochsiedenden Chlorsilane z. B. aus 50 Gew.% Si₂Cl₆, > 35 Gew.% Si₂HCl₅, 10 Gew.% Si₂H₂Cl₄ (2 Isomere), 5 Gew.% Si₂H₃Cl₃ (2 Isomere) und < 1 Gew.% höhere Silane (beispielsweise Si₃Cl₈).

Die Abgase aus der Abscheidung von polykristallinem Silicium können fast vollständig für die Herstellung von polykristallinem Silicium recycelt werden. Die Abgase werden kondensiert und nachfolgend destilliert. Dabei wird die Nieder siederfraktion, welche Silane mit einem Siedepunkt < 40°C unter atmosphärischen Bedingungen (1013 hPa) enthält (z. B. Monochorsilan, Dichlorsilan und Trichlorsilan), von den höher siedenden Chlorsilanen destillativ abgetrennt und wieder für die Si-Abscheidung genutzt. Aus dem verbleibenden Gemisch aus Siliciumtetrachlorid und den hochsiedenden Chlorsilanen wird Siliciumtetrachlorid destillativ zum Teil abgetrennt und beispielsweise über eine Hydrierung in Trichlorsilan umgewandelt, welches wiederum bei der Si-Abscheidung Verwendung findet. Das als Rückstand verbleibende Siliciumtetrachlorid mit den nunmehr etwas aufkonzentrierten hochsiedenden Chlorsilanen kann durch verschiedene Verfahren weiterverarbeitet werden. Diese Hochsieder-Fraktion besteht praktisch nur aus Disilanen (Hexa-, Penta-, Tetra- und Trichlordisilan) und Oligosilanen (Tri- und Tetra-Silanen). Auf Grund der hohen Reinheit dieser Fraktion ist es möglich, diese einer wirtschaftlichen Verwertung zuzuführen.

So beschreibt US6846473 ein Verfahren zur Chlorierung dieser hochsiedenden Fraktion mit nachfolgender Isolation von Si₂Cl₆ zur Verwendung für Halbleiterzwecke.
Es ist ferner bekannt, diese Hochsiederfraktion den im Folgenden genannten weiteren Verfahrensschritten zu unterziehen, wobei man recyclebares Trichlorsilan und Siliciumtetrachlorid erhält. So beschreibt JP1-188414 (Yoshitomi, Oomure Osaka Titanium Co., Ltd. 1988) die Rückführung dieser Fraktion in den Wirbelschicht-Reaktor zur Herstellung von Trichlorsilan.
Wakamatsu JP09-263405 Tokuyama 1996 beschreibt die Spaltung der Disilane, welche aus der Si-Abscheidung erhalten wurden, mit HCl an Aktivkohle bei erhöhter Temperatur.
Die Umsetzung dieser Hochsiederfraktion zusammen mit Siliciumtetrachlorid und Wasserstoff in einem Hochtemperaturreaktor wird in US2002/0187096 (Kendig, Landis, McQuiston Dow Corning 2001) beschrieben.
Eine weitere Möglichkeit zur Spaltung dieser Hochsieder an N-oder P-Basen wird in DE3503262 beschrieben.
Diesen Verfahren ist gemeinsam, dass die Hochsieder mit Wasserstoff und/oder HCl gespalten werden, um aus diesen Trichlorsilan und Siliciumtetrachlorid zu erhalten. Diese Verfahren beinhalten jeweils einen hohen technischen Aufwand für die zusätzlichen Verfahrensschritte.

Die Herstellung von SiO₂-Pulvern über Flammenpyrolyse ist beispielsweise aus DE2620737 und EP790213 bekannt. Ausgangsmaterial für das Siliciumdioxid-Pulver ist in der Regel Siliciumtetrachlorid. Neben Siliciumtetrachlorid finden auch Methyltrichlorsilan, Trichlorsilan oder deren Mischungen mit Siliciumtetrachlorid Anwendung. Auch chlorfreie Silane oder Siloxane können eingesetzt werden. Nach EP790213 ist auch der Einsatz von dimeren Chlorsilanen und Siloxanen möglich.

Dokumente DE 29 09 815 A1 und US 4 565 682 A beziehen sich auf den allgemein bekannten Stand der Technik der Verbrennung von reinem Siliciumtetrachlorid zur Herstellung von pyrogener Kieselsäure.

Aufgabe der vorliegenden Erfindung ist es, ein wirtschaftliches Verfahren zur Nutzung der hochsiedenden Chlorsilane aus den Abgasen der Abscheidung von polykristallinem Silicium aus Chlorsilanen und Wasserstoff, bereitzustellen. Im Gegensatz zu den schon bekannten Verfahren zur Verwertung dieser Hochsieder soll dies ohne zusätzlichen apparativen Aufwand innerhalb eines schon bestehenden Chlorsilan-Verbund gelöst werden.

Diese Aufgabe wird gelöst durch ein Verfahren zur Herstellung von pyrogener Kieselsäure, welches dadurch gekennzeichent ist, dass das Abgas aus der Abscheidung von polykristallinem Silicium aus Chlorsilan und Wasserstoff kondensiert und nachfolgend in einer Destillationskolonne aufgetrennt wird, wobei das Blasenprodukt dieser Destillationskolonne eine Hochsieder-Fraktion bestehend aus 0,5 - 20 Gew % an hochsiedenden Chlorsilanen sowie 99,5 - 80 Gew.% Siliciumtetrachlorid ist, und diese Hochsieder-Fraktion vollständig verdampft wird und der Chlorsilandampf zu einem Brenner geführt wird und dort mit Luft bzw. Sauerstoff sowie Wasserstoff in einer Flamme zu pyrogener Kieselsäure umgesetzt wird.

Das erfindungsgemäße Verfahren ermöglicht eine apparativ einfache Lösung zur Verwertung der im Abgas der Abscheidung von polykristallinem Silicium anfallenden hochsiedenden Silane (Hochsieder), da die Apparate zur Herstellung von pyrogener Kieselsäure in einem Chlorsilan-Verbund zur Verwertung von überschüssigem Siliciumtetrachlorid in der Regel schon vorhanden sind.

In dem ersten Schritt wird das Abgas aus der Abscheidung von polykristallinem Silicium in einer Destillationskolonne in 3 Fraktionen auftrennt. Dabei wird über den Kolonnenkopf die Fraktion, welche Dichlorsilan und Trichlorsilan enthält (Siedepunkt dieser Fraktion < 40°C), abdestilliert und zur Wiederverwendung in der Abscheidung von polykristallinem Silicium recycelt. Die zweite Fraktion wird dem Blasenseitenabzug der Kolonnen entnommen. Sie enthält praktisch reines Siliciumtetrachlorid (Siedepunkt 57°C) mit einem Trichlorsilan- und Hochsieder-Gehalt von jeweils < 0,01 %. Das dabei erhaltene halbleiter-reine STC kann entweder für CVD-Prozesse in der Halbleiterindustrie Verwendung finden oder wird wieder zu Trichlorsilan hydriert bzw. findet Verwendung in der Herstellung von pyrogener Kieselsäure. Das Blasenprodukt dieser Destillationskolonne enthält je nach Fahrweise der Kolonne von 0,5 - 20 Gew.% an hochsiedenden Chlorsilanen, der Rest ist Siliciumtetrachlorid (Hochsieder-Fraktion).

Diese Hochsieder Fraktion eignet sich vorzüglich zur Herstellung von pyrogener Kieselsäure, da der Metallgehalt (für die einzelnen Metalle jeweils < 10 ppbw) und der Bor-Gehalt (mit < 10 ppbw) jeweils sehr gering ist.

In einer Variante des erfindungsgemäßen Verfahrens wird die Hochsieder-Fraktiön in einem nachgielagerten Destillationsschritt nochmals destilliert, um weiteres Siliciumtetrachlorid abzutrennen, ehe sie verdampft und der Verbrennung zugeführt werden. Die hochsiedenden Chlorsilane können in diesem Schritt auf bis zu 50 Gew.% aufkonzentriert werden.

Um einen definierten Wasserstoffgehalt in der Hochsiederfraktion zur Herstellung von pyrogener Kieselsäure einzustellen, ist es bevorzugt, dass die Hochsiederfraktion mit Chlor zur Reaktion gebracht wird, ehe sie verdampft und der Verbrennung zugeführt wird. Dazu wird der Gehalt an SiH Verbindungen in der Hochsiederfraktion bestimmt, eine daraus errechnete Menge Chlor zu der Hochsiederfraktion gegeben, und dadurch der H-Gehalt in der Hochsiederfraktion verringert ehe sie verdampft und der Verbrennung zugeführt wird. Vorzugsweise wird dieser Schritt unter UV-Bestrahlung durchgeführt.

Die Herstellung der Kieselsäure erfolgt wie im Stand der Technik bekannt, wobei statt Tetrachlorsilan die genannte hochsiederhaltige Fraktion eingesetzt wird. Die hochsiederhaltige Fraktion wird vollständig verdampft, der Chlorsilandampf wird mit Luft bzw. einem sauerstoffhaltigen Gasgemisch sowie Wasserstoff gemischt und anschließend einem Reaktor zuführt, in dem das Gasgemisch in einer Flamme zu pyrogener Kieselsäure umgesetzt wird. Ebenso können die Gase getrennt der Flamme zugeführt werden.

Das Mischungsverhältnis von Chlorsilandampf zu Luft bzw. einem sauerstoffhaltigem Gasgemisch liegt vorzugsweise zwischen 0,06 und 0,18 sowie zu Wasserstoff zwischen 0,25 und 0,60 (Volumenverhältnis).

Das vom Gasstrom abgetrennte feste Silciumoxidpulver wird vorzügsweise einer Nachreinigung mit erhitzter Luft oder einer mit Wasser angereicherten Luft unterzogen.

Der Einsatz der genannten Hochsiederfraktion zur Herstellung eines Siliciumdioxid-Pulvers hat sich als vorteilhaft erwiesen, da die Hochsieder-Fraktion ohne zusätzlich apparativen Aufwand in den bestehenden Anlagen eines Chlorsilan-Verbundes zu einem wertvollen Produkt (pyrogene Kieselsäure) verarbeitet werden kann. Es fallen durch diese Verfahrensweise keine Abfälle an, die die Umwelt belasten würden. Neben den genannten Vorteilen für die wirtschaftliche Optimierung der Herstellung von polykristallinem Silicium hat sich gezeigt, dass der größere Energieinhalt der Verbindungen dazu führt, dass sich die Brennstoffmenge um 10 bis 40 % reduziert, die bei der Herstellung von Siliciumdioxid eingesetzt werden muss. Zudem wird auf diese Weise ein besonders Metall- und Bor-armes SiO₂-Pulver hergestellt.

Ein geringer Bor-Gehalt von kleiner 4 ppm im Siliciumdioxid-Pulver ist für zahlreiche Anwendungen vorteilhaft. Eine solche Kieselsäure lässt sich für Dispersionen, insbesondere zum Chemisch-Mechanischen-Polieren in der Halbleiterindustrie, vorteilhaft einsetzen.

Die folgenden Beispiele dienen der weiteren Erläuterung der Erfindung. In den Beispielen wurde die spezifische Oberfläche der Kieselsäure über Absorption von Stickstoff gemäß DIN 66131/66132 bestimmt. Die Messung des pH-Werts erfolgt in einer 4 %igen wässerigen Dispersion in Anlehnung an DIN ISO 787/9. Der Bor-Gehalt wurde ermittelt, indem 5 g Siliciumoxidpulver in Flusssäure aufgeschlossen werden. Nach Aufnahme in Salpetersäure erfolgt die Bestimmung des Bor-Gehaltes der erhaltenen Lösung mittels ICP-AES (induktiv gekoppelte Plasma-Atomemissionsspektroskopie).

Die folgenden Beispiele dienen der weiteren Erläuterung der Erfindung.

### Beispiel 1 (Vergleichsbeispiel))

Reines Siliciumtetrachlorid wurde bei etwa 160°C verdampft, mit Luft und Wasserstoff im Verhältnis 0,1 bzw. 0,5 gemischt und in einem aus der Patentschrift DE2620737C2 bekannten Reaktor zu hochdispersem Siliciumdioxid verbrannt.
Bei der Umsetzung entstand Siliciumdioxid mit einer BET-Oberfläche von 199 m²/g und einem pH-Wert von 4,13. Der Bor-Gehalt des SiO₂-Pulvers lag bei 2,2 ppm.

### Beispiel 2)

Ein aus der Si-Abscheidung erhaltenes Chlorsilangemisch (bestehend aus Mono-, Di-, Tri- und Tetrachlorsilan mit < 0,5 Gew.% Hochsiedern) wird in einer Destillationskolonne destilliert, um MCS, Dichlorsilan und Trichlorsilan abzutrennen, welches für die Si-Abscheidung recycelt wird. Das Blasenprodukt enthält 0,5 - 2 Gew.% Hochsieder in Siliciumtetrachlorid. Diese Mischung wurde zur Herstellung von pyrogener Kieselsäure, wie in Beispiel 1 beschrieben, eingesetzt, mit dem Unterschied, dass statt Siliciumtetrachlorid das o. g. Blasenprodukt eingesetzt wurde. Das erhaltene SiO₂-Pulver hatte eine BET-Oberfläche von 201 m²/g und einen pH-Wert von 4,16. Der Bor-Gehalt lag bei < 1,5 ppm.

### Beispiel 3)

Das Blasenprodukt aus Beispiel 2) wurde in einer Destillationskolonne so aufdestilliert, dass ein Chlorsilangemisch mit einen Gehalt von ca. 25 Gew.% Hochsiedern erhalten wurde. Dieses Chlorsilangemisch wurde analog Beispiel 2 zur Herstellung von pyrogener Kieselsäure genutzt.
Das erhaltene SiO₂-Pulver hatte eine BET-Oberfläche von 198 m²/g und einen pH-Wert von 4,15. Der Bor-Gehalt lag bei < 1 ppm.

### Beispiel 4)

Das Blasenprodukt aus Beispiel 2) wurde mittels GC analysiert, um den Gehalt an Si-H-Verbindungen zu ermitteln. Daraus wurde die erforderliche Chlormenge zur vollständigen Chlorierung der Si-H-Gruppen ermittelt. Dieses Produkt wurde mit 1,1 mol Chlor pro mol Si-H unter Bestrahlung mit einer Quecksilberdampf-Lampe zur Reaktion gebracht, um Si-H-Verbindungen in Si-Cl-Verbindungen umzuwandeln und nachfolgend destilliert. Das erhaltene Blasenprodukt enthielt nunmehr ca. 25 % Si₂Cl₆ und nur noch Spuren im ppm-Bereich von Si-H-Verbindungen. Dieses Produkt wurde analog Beispiel 2 zu SiO₂ umgesetzt. Das erhaltene SiO₂-Pulver hatte eine BET-Oberfläche von 204 m²/g und einen pH-Wert von 4,11. Der Bor-Gehalt lag bei < 1,5 ppm.

## Patentansprüche

1. Verfahren zur Herstellung von pyrogener Kieselsäure, welches dadurch gekennzeichent ist, dass das Abgas aus der Abscheidung von polykristallinem Silicium aus Chlorsilan und Wasserstoff kondensiert und nachfolgend in einer Destillationskolonne aufgetrennt wird, wobei das Blasenprodukt dieser Destillationskolonne eine Hochsieder-Fraktion bestehend aus 0,5-20 Gew % an hochsiedenden Chlorsilanen sowie 99,5-80 Gew.%, Siliciumtetrachlorid ist, und diese Hochsieder-Fraktion vollständig verdampft wird und der Chlorsilandampf zu einem Brenner geführt wird und dort mit Luft bzw. Sauerstoff sowie Wasserstoff in einer Flamme zu pyrogener Kieselsäure umgesetzt wird.

2. Verfahren gemäß Anspruch 1, **dadurch gekennzeichnet, dass** die Hochsieder-Fraktion in einem weiteren Destillationsschritt nochmals destilliert wird, um weiteres Siliciumtetrachlorid abzutrennen, ehe sie verdampft und der Verbrennung zugeführt wird.

3. Verfahren gemäß Anspruch 1 oder 2, **dadurch gekennzeichnet, dass** die Hochsiederfraktion mit Chlor zur Reaktion gebracht wird, ehe sie verdampft und der Verbrennung zugeführt wird.

4. Verfahren gemäß Anspruch 3, **dadurch gekennzeichnet, dass** die Umsetzung mit Chlor unter UV-Bestrahlung durchgeführt wird.

5. Verfahren gemäß Anspruch 1 bis 4, **dadurch gekennzeichnet, dass** Chlorsilandampf und Luft bzw. ein sauerstoffhaltiges Gasgemisch in einem Mischungsverhältnis von 0,06 bis 0,18 sowie Chlorsilandampf zu Wasserstoff in einem Mischungsverhältnis von 0,25 bis 0,60 (Volumenverhältnis) vorliegen.

## Claims

1. Process for preparing pyrogenic silica, which is **characterized in that** the offgas from the deposition of polycrystalline silicon from chlorosilane and hydrogen is condensed and subsequently fractionated in a distillation column, with the bottom product from this distillation column being a high boiler fraction comprising 0.5-20% by weight of high-boiling chlorosilanes and 99.5-80% by weight of silicon tetrachloride and this high boiler fraction being completely evaporated and the chlorosilane vapour being fed to a burner and there reacted with air or oxygen and hydrogen in a flame to give pyrogenic silica.

2. Process according to Claim 1, **characterized in that** the high boiler fraction is distilled again in a downstream distillation step in order to separate off further silicon tetrachloride before the high boilers are vaporized and passed to combustion.

3. Process according to Claim 1 or 2, **characterized in that** the high boiler fraction is reacted with chlorine before it is vaporized and passed to combustion.

4. Process according to Claim 3, **characterized in that** the reaction with chlorine is carried out under UV irradiation.

5. Process according to any of Claims 1 to 4, **characterized in that** chlorosilane vapour and air or an oxygen-containing gas mixture are present in a mixing ratio of from 0.06 to 0.18 and chlorosilane vapour and hydrogen are present in a mixing ratio of from 0.25 to 0.60 (volume ratio).

## Revendications

1. Procédé pour la production de silice pyrogénée, qui est **caractérisé en ce qu'**on condense le gaz rejeté provenant du dépôt de silicium polycristallin à partir de chlorosilane et hydrogène et ensuite on le fractionne dans une colonne de distillation, le produit de fond de cette colonne de distillation étant une fraction constituée de composants à haut point d'ébullition consistant en 0,5-20 % en poids de chlorosilanes à haut point d'ébullition ainsi qu'en 99,5-80 % en poids de tétrachlorure de silicium, et on vaporise complètement cette fraction constituée de composants à haut point d'ébullition et on envoie la vapeur de chlorosilane à un brûleur et dans celui-ci on la convertit dans une flamme, avec de l'air ou de l'oxygène ainsi que de l'hydrogène, en silice pyrogénée.

2. Procédé selon la revendication 1, **caractérisé en ce que** dans une nouvelle étape de distillation on distille encore une fois la fraction constituée de composants à haut point d'ébullition, afin de séparer une nouvelle quantité de tétrachlorure de silicium, avant de la vaporiser et de l'envoyer à la combustion.

3. Procédé selon la revendication 1 ou 2, **caractérisé en ce qu'**avant de la vaporiser et de l'envoyer à la combustion on fait réagir avec du chlore la fraction constituée de composants à haut point d'ébullition.

4. Procédé selon la revendication 3, **caractérisé en ce que** la réaction avec le chlore est effectuée sous irradiation UV.

5. Procédé selon l'une quelconque des revendications 1 à 4, **caractérisé en ce que** la vapeur de chlorosilane et l'air ou un mélange gazeux contenant de l'oxygène sont présents en un rapport de mélange valant de 0,06 à 0,18 et la vapeur de chlorosilane et l'hydrogène sont présents en un rapport de mélange valant de 0,25 à 0,60 (rapport en volume).
